# EUROPÄISCHE PATENTSCHRIFT

(11) **EP 2 095 542 B1**
(45) Veröffentlichungstag und Bekanntmachung des Hinweises auf die Patenterteilung: **11.01.2012**
(21) Anmeldenummer: 07818477.7
(22) Anmeldetag: 26.09.2007
(51) Int. Cl.: H04B 10/08

(54) **DEMARKATIONSGERÄTE, NETZWERK UND VERFAHREN**
DEMARCATION DEVICES, NETWORK AND METHOD
APPAREILS DE DÉMARCATION, RÉSEAU ET PROCÉDÉ

(30) Priorität: 26.09.2006 DE 102006045802
(43) Veröffentlichungstag der Anmeldung: 02.09.2009
(73) Patentinhaber: Karlsruher Institut für Technologie, 76131 Karlsruhe (DE)
(72) Erfinder: LEUTHOLD, Jürg, 75045 Walzbachtal (DE); FREUDE, Wolfgang, 76199 Karlsruhe (DE); PFEIFFER, Thomas, 70569 Stuttgart (DE); BÖTTGER, Gunnar, 10437 Berlin (DE); RÖGER, Moritz, 76185 Karlsruhe (DE)
(74) Vertreter: Müller-Boré & Partner Patentanwälte
(86) Internationale Anmeldenummer: PCT/EP2007/008394
(87) Internationale Veröffentlichungsnummer: WO 2008/037462

(56) Entgegenhaltungen:
- US-A- 5 771 114
- US-A- 5 907 417

## Beschreibung

Die Erfindung betrifft Demarkationsgeräte, ein Netzwerk und ein Verfahren zum Betreiben zumindest eines Demarkationsgerätes.

### Stand der Technik

Zur Realisierung von Teilnehmerüberwachungen in optischen Netzwerken gibt es verschiedene Ansätze.

Zum einen kann an der Schnittstelle eines Telekommproviders zum Kunden ein Demarkationsgerät angebracht werden, welches elektrisch gespeist wird und verschiedene Funktionen ausführen kann. Somit könnte ein derartiges Demarkationsgerät z.B. den Signalpegel vom Provider und/oder Kunden mittels eines Sensors detektieren und an den Provider zurücksenden. In einer weiteren Anwendung könnte das Demarkationsgerät dem Provider auch eine Teilnehmeridentitätskennung zurücksenden. Da all diese Funktionen permanent oder temporär von elektrischen Sensoren und Prozessoren ausgeführt werden, muß das Gerät konstant mit elektrischer Energie gespeist werden. Diese Energiespeisung bedingt, daß das Gerät an das elektrische Netz angeschlossen wird, mittels einer Batterie betrieben wird oder z.B. mittels Solarzellen versorgt wird.

Neuere Methoden arbeiten ohne elektrische Einspeisung. So kann man z.B. durch Anbringen eines spezifischen Bragg-Gratings im Demarkationsgerät ein optisches Signal via Glasfaser einspeisen. Wenn das Signal auf das Bragg-Grating trifft wird ein Teil des Lichts zurück reflektiert. Der Provider kann dann anhand des zurück reflektierten Signalpegels Rückschlüsse auf die Leitungsqualität ziehen. Zusätzlich könnte er anhand der spektralen Anteile auch Informationen über den Teilnehmer Dokument US 5 907 417 A bezieht sich auf ein passives optisches Netzwerk. Ein Diagnosesignal wird in einer Netzwerkeinheit über eine Eingangsleitung empfangen und in eine Rückleitung zurückgekoppelt. In der Zentraleinheit wird das zurückgekoppelte Signal dazu benutzt, Informationen über den Status des Netzwerkes zu erhalten.

Dokument US 5 771 114 A bezieht sich auf ein System zur Übermittlung von optischer Leistung und Signalen von einer ersten Einheit zu einer zweiten Einheit. Das von der ersten Einheit ausgesandte Licht wird in der zweiten Einheit durch einen Leistungskonverter empfangen.

Es ist eine Aufgabe der Erfindung, eine effiziente Wartung eines optischen Netzwerkes zu ermöglichen.

Diese Aufgabe wird gelöst durch den jeweiligen Gegenstand der unabhängigen Ansprüche. Bevorzugte Ausführungsformen ergeben sich aus den Unteransprüchen.

### Demarkationsgerät gemäß einem Aspekt

Ein Aspekt der vorliegenden Erfindung betrifft ein Demarkationsgerät, das in zumindest eine optische Datenleitung integrierbar ist, umfassend
- zumindest ein Lichtkoppelelement, welches ausgelegt ist, aus der zumindest einen optischen Datenleitung zumindest einen Teil des Lichts zu entnehmen,
- zumindest ein Lichtumwandlungselement, welches ausgelegt ist, den entnommenen Teil des Lichts zumindest teilweise in elektrische Energie umzuwandeln, und
- zumindest eine Speichereinrichtung, welche ausgelegt ist, diese elektrische Energie zumindest teilweise zu speichern,
wobei eine Versorgung des Demarkationsgerätes mit Energie unabhängig von einer externen Strom- und/oder Spannungsversorgung ist.

### Demarkationsgerät gemäß einem weiteren Aspekt

Ein weiterer Aspekt der Erfindung betrifft ein Demarkationsgerät, das in eine optische Datenleitung integriert wird, dadurch gekennzeichnet, daß es aus der optischen Datenleitung einen Teil des Lichts entnimmt, diesen Teil in elektrische Energie umwandelt, diese speichert und bei Bedarf mit der gespeicherten elektrischen Energie eine Funktion ausführen kann und somit mit Energie versorgt ist, daß das Gerät unabhängig von einer externen Strom- oder Spannungsversorgung ist.

Vorteilhafterweise wird somit ein flexibel einsetzbares Gerät zur verbesserten Wartung eines optischen Netzwerkes bereitgestellt.

In der optischen Datenleitung wird vorzugsweise Licht einer oder mehrerer Wellenlängen über eine räumliche Distanz transportiert. Bevorzugterweise befinden sich diese Wellenlängen in einem Bereich von etwa 200 nm bis etwa 2000 nm, besonders bevorzugt zwischen von etwa 300 nm bis etwa 700 nm und/oder von etwa 1000 nm bis etwa 1700 nm, besonders vorzugsweise in einem Bereich von etwa 1300 nm bis etwa 1500 nm, insbesondere bei etwa 1300 nm und/oder etwa 1500 nm. Es sind jedoch auch Wellenlängenbereiche für die Wellenlängen des transportierten Lichts denkbar, die sich mehr zum langwelligeren und/oder kurzwelligeren Bereich hin erstrecken. Ferner findet der Transport des Lichts bevorzugterweise durch einen oder mehrere Lichtwellenleiter statt, der beispielsweise zumindest eine Glasfaser umfaßt bzw. aus zumindest einer Glasfaser besteht. Vorzugsweise findet Totalreflexion des Lichts an den Oberflächen des bzw. der Glasfaser(n) statt.

In anderen Worten betrifft die Erfindung das Gebiet der optischen Nachrichtentechnik, speziell die Technologie, die sich mit der Überwachung von Leitungen und Teilnehmerkennung befaßt und insbesondere auch solche Technologien, die auf keinerlei externe Energieversorgung angewiesen sind, außer der optischen Datenleitung.

Beispielsweise kann das Demarkationsgerät in eine optische Datenleitung integrierbar sein und seine Energie aus dem Licht der Datenleitung beziehen. Dabei kann das Demarkationsgerät einen oder mehrere Anschlüsse für optische Datenleitungen aufweisen, über die es mit anderen Geräten eines optischen Netzwerkes verbunden werden kann. Beispielsweise kann das Demarkationsgerät dadurch in eine optische Datenverbindung zwischen einem Provider und einem Kunden integriert sein bzw. werden. Der Begriff "integrierbar", wie er im Sinne der vorliegenden Erfindung verwendet wird, beschreibt beispielsweise, daß eine oder mehrere optischen Datenleitungen vorliegen. Optische Datenleitungen sind insbesondere Lichtwellenleiter, beispielsweise Glasfaserkabel, wie sie herkömmlich zur Übertragung von Daten verwendet werden. Ist bzw. wird das Demarkationsgerät in die optische Datenleitung integriert, so kann das Demarkationsgerät an das Glasfaserkabel angeschlossen werden bzw. ist das Demarkationsgerät an das Glasfaserkabel angeschlossen. Beispielsweise kann das Demarkationsgerät einen Anschluß, bzw. eine Schnittstelle bzw. Eingang/Ausgang aufweisen, mit dem es mit dem Glasfaserkabel verbunden ist und mit dem Licht aus dem Glasfaserkabel in das Demarkationsgerät geleitet werden kann und umgekehrt. Alternativ oder zusätzlich kann das Demarkationsgerät auch über getrennte Eingänge bzw. Ausgänge verfügen und damit in die optische Datenleitung integriert sein. In einer Ausführungsform kann beispielsweise ein Segment bzw. Teil des Lichtwellenleiters als bevorzugter optischer Datenleitung providerseitig mit einem Eingang/Ausgang des Demarkationsgeräts verbunden sein und ein zweites Segment bzw. Teil des Lichtwellenleiters benutzerseitig mit einem Eingang/Ausgang des Demarkationsgeräts verbunden sein.

Weiterhin ist es denkbar, daß das Demarkationsgerät derart in ein optisches Netzwerk integriert wird, daß es über mehrere optische Datenleitungen eine Verbindung zu mehr als zwei anderen Geräten des optischen Netzwerkes bzw. mehreren optischen Netzwerken hat, und somit einen Knotenpunkt bildet. Es ist denkbar, daß in der optischen Datenleitung eine oder mehrere Wellenlängen verwendet werden.

Erfindungsgemäß ist das Lichtkoppelelement dazu ausgelegt, aus zumindest einer der optischen Datenleitungen zumindest einen Teil des Lichts zu entnehmen. In diesem Zusammenhang kann das Lichtkoppelelement auch als Koppler bezeichnet werden bzw. ausgebildet sein. Beispielsweise ist das Lichtkoppelelement über zumindest einen Anschluß mit einer oder mehreren optischen Datenleitungen verbunden, die eine Verbindung mit anderen Geräten des optischen Netzwerkes bzw. weiteren optischen Netzwerken darstellen. Weiterhin kann das Lichtkoppelelement zumindest einen weiteren Anschluß bzw. Eingang/Ausgang aufweisen, über den eine optische Datenverbindung zu internen Komponenten des Demarkationsgerätes besteht. Dadurch kann das Lichtkoppelelement eine Verbindung zwischen anderen Geräten des optischen Netzwerkes und den internen Komponenten des Demarkationsgerätes sein bzw. ermöglichen. Es ist denkbar, daß das Lichtkoppelelement einen Teil des Lichts aus der optischen Datenleitung entnimmt und es internen Komponenten des Demarkationsgerätes zuführt. Weiterhin ist es möglich, daß das Lichtkoppelelement auch ausgebildet ist, Licht von Komponenten des Demarkationsgerätes in die optische Datenleitung einzuspeisen, so daß das Demarkationsgerät mit anderen Geräten des optischen Netzwerkes kommunizieren kann und/oder Energie austauschen kann.

Dabei kann der entnommene Teil des Lichts ein bestimmter oder bestimmbarer Frequenzbereich des Lichts in der optischen Datenleitung sein. Der entnommene Teil des Lichts kann dadurch definiert sein, daß bei bestimmten oder bestimmbaren Frequenzen, insbesondere optischen Frequenzen ein bestimmter oder bestimmbarer Intentsitätsanteil des in der optischen Datenleitung vorhandenen Lichts der optischen Datenleitung entnommen wird bzw. daraus ausgekoppelt wird. Dieser Teil kann durch das Lichtkoppelelement oder aber durch andere Komponenten des Demarkationsgerätes bestimmt oder bestimmbar sein. Dabei ist es denkbar, daß das Demarkationsgerät automatisch den entnommenen Teil des Lichts in seinem Intensitätsanteil und/oder den (optischen) Frequenzbereichen anpaßt. Eine solche Anpassung kann sich beispielsweise nach dem in der Datenleitung oder den Datenleitungen enthaltenen Licht oder an dem momentanen Energiebedarf des Demarkationsgerätes richten.

Weiterhin kann das Lichtkoppelelement beispielsweise mindestens einen internen Anschluß aufweisen, über den eine interne optische Datenleitung bzw. Datenverbindung zu internen Komponenten des Demarkationsgerätes hergestellt werden kann.

Das Lichtumwandlungselement wandelt bevorzugterweise Licht in elektrische Energie um. Innerhalb des Demarkationsgerätes kann so beispielsweise der vom Lichtkoppelelement entnommene Teil des Lichts auf das Lichtumwandlungselement geleitet werden. Durch das Lichtumwandlungselement kann dieser entnommene Teil des Lichts zumindest teilweise in elektrische Energie umgewandelt werden. Beispielsweise kann unter einem Lichtumwandlungselement ein optoelektrischer Wandler, insbesondere eine Fotodiode verstanden werden. Weiterhin ist es auch vorstellbar, daß zumindest ein Bruchteil, insbesondere der gesamte nicht in Energie umgewandelte Teil des Lichts in elektrische Datensignale umgewandelt wird, wobei diese elektrischen Datensignale im Demarkationsgerät verarbeitet und/oder gespeichert und/oder an andere Geräte des optischen Netzwerkes weitergeleitet werden. Die Umwandlung von Licht in Signale kann entweder durch Lichtumwandlungselemente vorgenommen werden, die speziell dafür ausgelegt sind. Lichtumwandlungselemente können auch derart ausgebildet sein, Licht in Energie und elektrische Signale (simultan bzw. zeitlich abwechselnd) umzuwandeln. Beispielsweise kann das Lichtumwandlungselement als Fotodiode ausgebildet sein.

Die Speichereinrichtung ist vorzugsweise ausgelegt, die durch das Lichtumwandlungselement erzeugte elektrische Energie zumindest teilweise zu speichern. Dabei ist es denkbar, daß diese Speichereinrichtung bei der Montage des Demarkationsgerätes bereits über gespeicherte Energie verfügt, so daß das Zuführen von Energie durch das Lichtumwandlungselement das Entladen der Speichereinrichtung verlangsamt oder die Speichereinrichtung wieder vollständig auflädt. In anderen Worten kann durch bereits vorhandene Energie der Speichereinrichtung das Demarkationsgerät in einem ersten Schritt, d.h. beispielsweise bei einer Installation, in Betrieb genommen werden und anschließend durch die Energie des entnommenen Lichts betrieben werden. Bevorzugterweise ist die Speichereinrichtung als Akkumulator oder als Kondensator ausgebildet. Der nicht gespeicherte Teil des entnommenen Lichts kann beispielsweise zur direkten Versorgung des Demarkationsgerätes mit Energie (ohne Zwischenspeicherung) oder zur Umwandlung in Datensignale verwendet werden. Es ist auch möglich, daß die erzeugte Energie insbesondere dazu verwendet wird, um das Demarkationsgerät zu betrieben und jede überschüssige Energie dazu verwendet wird, den Energiespeicher zu laden. Vorteilhafterweise wird das Demarkationsgerät durch die elektrische Energie (des Lichtumwandlungselementes und der Speichereinrichtung) unabhängig von einer externen Strom- und/oder Spannungsquelle betrieben. Dabei soll das Demarkationsgerät ohne Zuführung von Strom und/oder Spannung von außerhalb des Demarkationsgerätes betrieben werden. Darüber hinaus ist es auch denkbar, daß die Speichereinrichtung nicht mehr oder selten nachgeladen oder ausgetauscht wird. So kann beispielsweise das Demarkationsgerät flexibel (ohne Rücksicht auf vorhandene Strom- und Spannungsquellen am Installationsort) und wartungsarm (insbesondere ohne oder nur selten erforderlichen Austausch oder Wiederaufladen der Speichereinrichtung) betrieben werden. Der Begriff "extern", wie er im Sinne der vorliegenden Erfindung verwendet wird beschreibt insbesondere Strom- und/oder Spannungsquellen, die nicht dem Demarkationsgerät zugeordnet sind. In anderen Worten wird dem Demarkationsgerät kein Strom und/oder keine Spannung von außen zugeführt. Eine äußere bzw. externe Strom- bzw. Spannungsquelle kann eine Strom- bzw. Spannungsquelle sein, die beispielsweise nicht innerhalb des Gehäuses des Demarkationsgeräts angeordnet ist. Der Bergiff "extern" betrifft insbesondere das Gegenteil von "intern".

In einer bevorzugten Ausführungsform weist das Demarkationsgerät keinen Eingang/Ausgang für eine Strom und/oder Spannungszufuhr auf. Es ist auch möglich, daß das Demarkationsgerät im regulären Betrieb ohne Zufuhr von Strom und/oder Spannung von außen, d.h. extern, betreibbar ist und lediglich in Ausnahmefällen Strom und/oder Spannung von außen zugeführt wird.

Bevorzugterweise kann ein Teil des optischen Datensignals auf eine Fotodiode geleitet werden, mit möglichst hohem Wirkungsgrad in elektrische Energie umgewandelt und zwischengespeichert werden. Mit der vorhandenen elektrischen Energie können beispielsweise die oben genannten Überwachungsfunktionen mit energieeffizienten Sensoren durchgeführt werden. Beispielsweise kann dann durch eine direkte Messung der Intensität des ankommenden Lichts der Zustand der Leitung festgestellt werden.

Vorteilhafterweise wird somit ein neuartiges Gerät zur Verfügung gestellt, das die Übertragungsqualität einer optischen Leitung ermitteln und zusammen mit weiteren Daten über dieselbe Leitung versenden kann, ohne dabei auf zusätzliche Energiequellen zur optischen Datenübermittlung bzw. Datenleitung, insbesondere zur Kommunikation über eine optische Datenleitung angewiesen zu sein. Des weiteren vorteilhafterweise wird insbesondere ein Gerät hergestellt, das Vorteile der Sensormessung vor Ort nutzen kann, aber auf keine externe elektrische Energieversorgung angewiesen ist.

So werden vorteilhafterweise Probleme umgangen, die eine elektrische Versorgung mit sich bringt. Vielmehr ist der Betrieb dieses Geräts vorteilhafterweise vom Netz unabhängig, d.h. im wesentlichen ist das Demarkationsgerät autark. Bei Ausfällen des elektrischen Netzes fällt das (autarke) Demarkationsgerät nicht aus. Weiterhin können Störungen wie z.B. Spannungsspitzen in einem elektrischen Netz das Gerät nicht beschädigen oder sogar zerstören, da das Demarkationsgerät nicht in ein elektrisches Netz integriert ist, sondern lediglich in ein oder mehrere optischen Datennetze. Des Weiteren sind durch einen fehlenden Anschluß an das elektrische Netz ökonomische Vorteile verbunden: es stellt sich nicht die Frage, wer die anfallenden Stromkosten für das Demarkationsgerät übernimmt. Auch wirft der Einbau von Batterien zur elektrischen Versorgung des Demarkationsgeräts keine Probleme auf. Es sind vorzugsweise keine Batterien eingebaut, die auslaufen können und das Gerät beschädigen können. Weiterhin vorteilhafterweise fallen keine Kosten für neue Batterien an und es muß niemand für den regelmäßigen Wechsel der Batterien verantwortlich gemacht werden. Weiterhin ergibt sich ein Vorteil gegenüber solarbetriebenen Geräten, da die Versorgung durch Solarzellen die Nutzbarkeit stark einschränkt, da ein solarbetriebenes Gerät von kontinuierlichem Licht abhängt und bei einem solarbetriebenen Gerät darauf geachtet werden muß, daß die Solarzelle nicht durch Staub, Schmutz oder sonstiges verdeckt wird.

Weiterhin ist das erfindungsgemäße Demarkationsgerät auch gegenüber herkömmlichen, stromlosen Geräten vorteilhaft. Beispielsweise vermeidet das erfindungsgemäße Demarkationsgerät den Einsatz von Bragg-Gratings, wodurch das erfindungsgemäße Demarkationsgerät insbesondere zur Teilnehmerkennung für den Massenmarkt geeignet ist. Insbesondere wird vorteilhafterweise vermieden, daß jedes Demarkationsgerät mit einem spezifischen Bragg-Grating ausgestattet werden muß, um eindeutig identifiziert werden zu können. Somit werden hohe Herstellungskosten vermieden. Zusätzlich zu den gesenkten Herstellungskosten kommt noch hinzu, daß das erfindungsgemäße Demarkationsgerät gegenüber Geräten mit Bragg-Gratings eine sehr flexible Identifikation ermöglicht. Insbesondere erfordert eine Änderung der Identifikation eines Geräts keinen Austausch eines Bragg-Gratings. Weiterhin vorteilhafterweise können im Gegensatz zu herkömmlichen Methoden, welche auf der Rückreflexion beruhen, nicht nur sehr spezifische Informationen abgefragt werden. Vielmehr sind auch weitergehende Daten, wie z.B. eine Erfassung der Temperatur etc: mit elektrischen Sensoren einfacher zu erlangen.

### Bevorzugte Ausführungsformen

Ferner ist das Demarkationsgerät vorzugsweise ausgebildet, bei Bedarf mit der gespeicherten elektrischen Energie zumindest eine Funktion auszuführen. Es ist denkbar, daß das Demarkationsgerät Überwachungsfunktionen der optischen Datenleitung durchführt. Weiterhin ist es auch möglich, daß das Demarkationsgerät ausgebildet ist, Routingfunktionen oder Filterfunktionen für das optische Netzwerk auszuführen. Ferner kann die Funktion des Demarkationsgerätes die Prüfung der Integrität einer optischen Datenleitung umfassen. Unter Prüfung der Integrität soll in diesem Zusammenhang verstanden werden, daß das Vorhandensein und/oder die Qualität des vorhandenen Signals bzw. der vorhandenen Signale in der optischen Datenleitung überprüft wird/werden, und eine davon abhängige Information - beispielsweise über die optische Datenleitung - an den Serviceanbieter (Provider) übermittelt wird.

Ein weiteres Beispiel für Funktionen, bzw. Einsatzgebiete ist der Einsatz zur Prozeßüberwachung. Dabei kann das Demarkationsgerät beispielsweise Sensoren, wie Feuchtigkeitssensor(en) und/oder Füllstandsanzeiger und/oder Temperatursensor(en) umfassen, die vorzugsweise Informationen aus der optischen Datenleitung erhalten und/oder in sie einspeisen. Ferner ist es denkbar, daß das Demarkationsgerät im Bereich der Sicherheitstechnik eingesetzt wird. Beispielsweise kann das Demarkationsgerät zumindest eine Kamera und/oder zumindest einen Bewegungssensor und/oder zumindest einen Feuersensor und/oder andere Sensoren umfassen, welche ebenfalls Informationen aus der optischen Datenleitung beziehen und/oder in sie einspeisen. Generell kann das Demarkationsgerät in Bereichen eingesetzt werden, bei denen optische Daten übertragen werden.

Dabei können diese Funktionen auch nur zeitweise nötig sein, so daß das Demarkationsgerät so ausgebildet sein kann, daß es zwischen aktiven und passiven Betriebszuständen wechselt.

Bevorzugterweise ist bzw. wird der entnommene Teil des Lichts ausschließlich optischen Datensignalen entnommen. Es ist denkbar, daß der entnommene Teil des Lichts ausschließlich aus Signalen besteht, die zur Datenübermittlung zwischen den Geräten des optischen Netzwerkes erforderlich sind. So kann beispielsweise keine separate optische Frequenz zur Energieversorgung des Demarkationsgerätes vorgesehen sein, die sich von den Frequenzen insbesondere Trägerfrequenz(en) der Datensignale unterscheidet. In anderen Worten kann das Licht, das anhand der optischen Datenleitung übertragen wird zur Daten- bzw. Informationsübertragung dienen, insbesondere ausschließlich zur Daten- bzw. Informationsübertragung dienen, d.h. insbesondere frei von zusätzlichen Anteilen, d.h. Frequenz- bzw. Wellenlängenbereichen sein, die ausschließlich zur Übertragung von Energie verwendet werden, ohne auch zur Daten- bzw. Informationsübertragung zu dienen. In anderen Worten wird das Licht, das zum Betreiben des Demarkationsgeräts verwendet wird, dem Datensignal entnommen, insbesondere ausschließlich dem Datensignal entnommen. Somit wird beispielsweise das Datensignal geschwächt. In diesem Zusammenhang ist es auch denkbar, daß das Demarkationsgerät die Nutzung der optischen Frequenzen der Datensignale zur Energieversorgung derart anpaßt, daß die Datenübermittlung zwischen den Geräten des optischen Netzwerkes nicht unnötig beeinträchtigt wird.

Weiterhin bevorzugterweise ist das optische Datensignal ein Telekommunikationsdatensignal. In anderen Worten umfaßt das optische Datensignal Daten zur Telekommunikation. Vorzugsweise ist unter dem Begriff Telekommunikation der Austausch von Daten zwischen mehreren Geräteeinheiten über eine räumliche Distanz zu verstehen. Geräteeinheiten können beispielsweise Telefone, und/oder Komponenten einer Videokonferenz-Einrichtung, Computer, Netzwerkrouter, sogenannte embedded elektronische Elemente, usw. sein. Im Rahmen dieser Beispiele werden unter anderem Daten übertragen, die akustische und/oder visuelle Signale repräsentieren. Ferner können beispielsweise auch Daten zwischen einzelnen Bildschirmarbeitsplätzen und/oder zwischen Bildschirmarbeitsplätzen und einem Zentralrechner übertragen werden. Ein weiteres Beispiel für den Begriff Telekommunikation ist der Austausch von Daten zwischen mehreren Computern. Im Rahmen dieses Beispiels stellen die Daten beispielsweise E-Mail-Nachrichten und/oder Dokumente von Textverarbeitungssystemen dar. Ferner ist es denkbar, daß die Computer beispielsweise über ein Protokoll (wie beispielsweise TCP/IP) kommunizieren.

Bevorzugterweise umfaßt das Demarkationsgerät weiterhin zumindest einen Transmitter. Bevorzugterweise wandelt der Transmitter elektrische Signale in optische Signale um. Diese optischen Signale können dann zumindest teilweise in die optische Datenleitung eingespeist werden. Vorteilhafterweise kann der Transmitter als optoelektrischer Wandler aufgefaßt werden.

Ferner wird vorzugsweise ein Demarkationsgerät bereitgestellt, wobei der Transmitter eine Laserdiode ist und/oder der Transmitter eine Lumineszenzdiode ist und/oder das Lichtumwandlungselement eine Fotodiode ist.

Bevorzugterweise wird der Transmitter über zumindest eines der Lichtumwandlungselemente gesteuert und/oder geregelt. Dadurch ist es denkbar, daß optische Signale, die durch Lichtumwandlungselemente umgewandelt werden, durch den Transmitter direkt (d.h. ohne weiteren Bearbeitungsschritt und/oder Speicherschritt) oder indirekt (d.h. mit zwischen geschalteten Bearbeitungsschritt und/oder Speicherschritt) durch den Transmitter wieder in optische Signale umgewandelt werden. Eine indirekte Steuerung kann auch eine Verarbeitung und/oder Speicherung durch einen Prozessor umfassen.

Weiterhin bevorzugterweise ist das Lichtkoppelelement dazu ausgebildet, den entnommenen Teil des Lichts auf das zumindest eine Lichtumwandlungselement zu leiten und Licht, das von dem zumindest einen Transmitter emittiert wird, zumindest teilweise in die optische Leitung zu speisen. Durch eine solche spezielle Ausbildung des Lichtkoppelelements ist es beispielsweise möglich, das Demarkationsgerät mit einem einzigen Lichtkoppelelement zu betreiben, ohne weitere Lichtkoppelelemente zu benötigen, insbesondere anzuordnen und/oder zu betreiben. Der durch das Lichtkoppelelement entnommene Teil des Lichts wird beispielsweise anhand eines Lichtleiters als bevorzugte interne optische Datenleitung zu dem Lichtumwandlungselement hin geleitet, dort aus dem Lichtleiter ausgekoppelt und das Licht trifft auf das Lichtumwandlungselement bzw. wird darauf gestrahlt und in elektrische Energie und/oder Signale umgewandelt. Ferner speist das Lichtkoppelelement vorzugsweise das Licht des Transmitters, das in eine interne optische Datenleitung eingekoppelt wurde in die optische Datenleitung ein.

Bevorzugterweise wird weiterhin ein Demarkationsgerät zur Verfügung gestellt, wobei zumindest eines der Lichtumwandlungselemente und der Transmitter als gemeinsames Bauelement ausgebildet sind. Beispielsweise kann dabei das gemeinsame Bauelement so ausgeführt sein, daß es eine einstückige Komponente bildet oder daß es zwar aus mehreren Komponenten besteht, jedoch eine gemeinsame Schnittstelle zu anderen Komponenten wie z.B. Lichtkoppelelemente, usw. bildet. Es ist darüber hinaus auch denkbar, daß zumindest eines der Lichtumwandlungselemente und der Transmitter räumlich so angeordnet sind, daß nur ein Lichtkoppelelement erforderlich ist. Beispielsweise können Lichtumwandlungselement(e) und Transmitter nah aneinander angeordnet sein bzw. so angeordnet sein, daß sie einander berühren.

Ferner vorzugsweise umfaßt das Demarkationsgerät zumindest ein weiteres Lichtkoppelelement, wobei zumindest eines der weiteren Lichtkoppelelemente dazu ausgelegt ist, den durch das erste Lichtkoppelelement entnommenen Teil des Lichts auf zumindest eines der Lichtumwandlungselemente zu leiten und/oder dazu ausgelegt ist, das Licht, das von dem zumindest einen Transmitter emittiert wird, zumindest teilweise zu dem Lichtkoppelelement zu leiten.

Beispielsweise kann durch ein weiteres Lichtkoppelelement der vom Lichtkoppelelement entnommene Teil des Lichtes in eine interne optische Datenleitung eingespeist werden, die zu einem der Lichtumwandlungselemente führt. Des weiteren kann das weitere Lichtkoppelelement das emittierte Licht des Transmitters, das in eine interne optische Datenleitung eingespeist wurde, in eine weitere interne optische Datenleitung einspeisen, die zum Lichtkoppelelement führt. Es ist ferner denkbar, daß mehrere weitere Lichtkoppelelemente, beispielsweise mindestens 2, 3, 4, 5, 10 usw. Lichtkoppelelemente in dem Demarkationsgerät installiert bzw. angeordnet sind. Weiterhin ist es möglich, daß mindestens ein Lichtkoppelelement als ein 1:n-Koppler ausgebildet ist, der zu n (d.h. mehreren) Lichtumwandlungselementen gleichzeitig Licht leiten kann. Es ist möglich, daß genau ein weiteres Lichtkoppelelement vorgesehen ist. Es können auch mehrere weitere Lichtkoppelelement, beispielsweise 2, 3, 4, 5, 10, 15, usw. weitere Lichtkoppelelemente vorgesehen sein.

Weiterhin bevorzugterweise sind das Lichtkoppelelement und zumindest eines der weiteren Lichtkoppelelemente als gemeinsames Bauelement ausgebildet. Beispielsweise kann dabei das gemeinsame Bauelement so ausgeführt sein, daß es als eine einstückige Komponente ausgebildet ist oder daß es zwar aus mehreren Komponenten besteht, jedoch eine gemeinsame Schnittstelle zu den anderen Komponenten bildet.

Ferner vorzugsweise umfaßt das Demarkationsgerät mehrere Lichtkoppelelemente und/oder mehrere Lichtumwandlungselemente und/oder mehrere Transmitter und/oder mehrere weitere Lichtkoppelelemente. Hierbei können die mehreren Lichtkoppelelement und die mehreren weiteren Lichtkoppelelemente baugleich sein. Es ist auch möglich, daß ein Lichtkoppelelement, das beispielsweise als erstes Lichtkoppelelement bezeichnet wird, vorgesehen ist. Nachfolgend an das erste Lichtkoppelelement können ein oder mehrere weitere Lichtkoppelelemente folgen. Bei Verwendung diese Terminologie können somit auch mehrere erste Lichtkoppelelemente vorgesehen sein. Ebenfalls können mehrere weitere Lichtkoppelelemente vorgesehen sein. Weiterhin vorzugsweise ist zumindest eines der Lichtumwandlungselemente weiterhin dazu ausgelegt, eine Intensität des einfallenden Lichts zu bestimmen und/oder ist zumindest eines der Lichtumwandlungselemente ein Datenempfänger. Bevorzugterweise können durch die Ausbildung des Lichtumwandlungselements als Datenempfänger Signale aus der optischen Datenleitung gelesen werden und innerhalb des Demarkationsgeräts entweder verarbeitet und/oder gespeichert werden und/oder wieder in eine der optischen Datenleitungen eingespeist werden. Ein Lichtumwandlungselement kann beispielsweise ausschließlich als Datenempfänger oder ausschließlich zur Umwandlung von Licht in Energie ausgelegt sein. Alternativ kann ein Lichtumwandlungselement auch derart ausgebildet sein, daß es diese beide Funktionen simultan oder abwechseind bzw. gemeinsam übernehmen kann. Das einfallende Licht ist insbesondere das entnommene Licht.

Ferner vorzugsweise umfaßt das Demarkationsgerät weiterhin zumindest ein Elektronikbauelement, wobei zumindest eines der Elektronikbauelemente dazu ausgelegt ist, Informationen zu speichern und/oder die Laserdiode als bevorzugtem Transmitter zu modulieren und/oder Sensorfunktionen und/oder Schaltfunktionen auszuführen. Dabei ist es denkbar, daß das Demarkationsgerät ein einziges Elektronikbauelement enthält, oder auch daß mehrere Elektronikbauelemente implementiert, bzw. vorgesehen sind, die miteinander verschaltet sein können. Es ist denkbar, daß das Elektronikbauelement einen oder mehrere Prozessoren umfaßt. Ebenfalls kann das Elektronikbaulement ein Mikrocontroller-Bauelement umfassen. Ferner kann in dem Elektronikbauelement eine Identifikationsnummer gespeichert sein.

Ferner vorzugsweise ist das Demarkationsgerät weiterhin ausgebildet, von dem zumindest einen Elektronikbauelement bestimmte Werte über den zumindest einen Transmitter in die optische Datenleitung einzuspeisen.

Der Begriff "bestimmt", wie er im Sinne der vorliegenden Erfindung verwendet wird, umfaßt beispielsweise berechnen, entnehmen einer Datenbank bzw. vergleichen mit Werten einer Datenbank bzw. abschätzen, insbesondere anhand von iterativen Methoden.

Weiterhin vorzugsweise ist/sind das Lichtkoppelelement und/oder zumindest eines der weiteren Lichtkoppelelemente wellenlängenselektiv und an eine Wellenlängensensitivität zumindest eines der Lichtumwandlungselemente angepaßt.

Weiterhin vorzugsweise sind mehrere weitere Lichtkoppelelemente in einer Kaskade verschaltet und/oder leiten mehrere weitere Lichtkoppelelemente zu jeder der Lichtumwandlungselemente Licht. Hierbei kann jeweils ein weiteres Lichtkoppelelement zu jeweils einem Lichtumwandlungselement Licht leiten. Ferner ist es auch denkbar, daß die weiteren Lichtkoppelelemente alle in direkter Verbindung mit dem (ersten) Lichtkoppelelement stehen, wobei das (erste) Lichtkoppelelement eine entsprechende Anzahl von Anschlüssen aufweist, um mit jedem weiteren Lichtkoppelelement verbunden zu werden. Des weiteren können ein oder mehrere weitere Lichtkoppelelemente als 1:n-Koppler ausgeführt sein. Durch jede diese Anordnungen oder auch durch eine entsprechende Kombination kann es beispielsweise möglich sein, eine Mehrzahl von Lichtumwandlungselementen mit Licht zu versorgen. Ferner ist es denkbar, daß dabei die einzelnen Lichtumwandlungselemente Licht von bestimmten oder bestimmbaren optischen Frequenzen zugeleitet bekommen, d.h. daß das Licht beispielsweise anhand der (ersten und/oder weiteren) Lichtkoppelelemente zumindest teilweise in seine spektralen Elemente bzw. Anteile zerlegt wird. Ferner ist auch eine parallele Anordnung der Lichtumwandlungselemente möglich, wobei jedes der Lichtumwandlungselemente mit Licht versorgt wird. Der Begriff "parallel", wie er im Sinne der vorliegenden Erfindung verwendet wird, beschreibt eine parallele Anordnung, wie sie in einem elektrischen Schaltkreis verwendet wird, wobei der Lichtweg eine elektrische Leitung ersetzt.

Weiterhin bevorzugterweise ist das Demarkationsgerät weiterhin ausgebildet, mit zumindest zwei optischen Datenleitungen verbindbar zu sein, wobei das Demarkationsgerät weiterhin dazu ausgebildet ist, aus mindestens einer ersten der optischen Datenleitungen den Teil des Lichts zu entnehmen, und in mindestens eine zweite der optischen Datenleitungen ein Signal einzuspeisen. Dabei ist es denkbar, daß die erste optische Datenleitung von der zweiten optischen Datenleitung verschieden ist oder auch mit der zweiten optischen Datenleitung gleich ist. Es ist denkbar, daß das Demarkationsgerät ausgebildet ist, automatisch festzulegen, aus welcher optischen Datenleitung der Teil des Lichts entnommen wird und in welche Signale einzuspeisen sind.

Ferner bevorzugterweise besteht das Demarkationsgerät aus einem Koppler, gefolgt von einem weiteren Koppler auf welchen eine Fotodiode, eine Laserdiode, ein Energiespeicher und ein Mikrocontroller-Bauelement folgen, wobei durch den Koppler einfallendes Licht zu einem weiteren Koppler weitergeleitet wird, von dort auf die Fotodiode, wo es in elektrische Energie umgewandelt, diese wiederum in den Energiespeicher geladen wird, welcher den Mikrocontroller und die Laserdiode, deren emittiertes Licht durch die beiden Koppler zurück in die Datenleitung geführt wird, mit Energie versorgt.

Weiterhin bevorzugterweise erfolgt die Versorgung mit Energie über eine oder mehrere Lichtwellenlängen und erfolgt eine Kommunikation des Demarkationsgeräts mit zumindest einer dieser Lichtwellenlängen. Alternativ oder zusätzlich können zur Kommunikation des Demarkationsgeräts auch Wellenlängen benutzt werden, die sich von dieser einen oder mehreren Lichtwellenlängen, über die die Versorgung des Demarkationsgeräts mit Energie erfolgt, unterscheiden.

Außerdem bevorzugterweise erfolgt die Versorgung des Demarkationsgeräts mit Energie ausschließlich aus dem Licht der optischen Datenleitung. Dabei kann die Versorgung mit Energie aus einer oder mehreren optischen Datenleitungen für den Betrieb des Demarkationsgerätes ausreichend sein. Ferner kann aber auch der ursprüngliche Ladungszustand des Energiespeichers in Verbindung mit der aus der optischen Datenleitung gewonnenen Energie ausreichen, um eine Versorgung mit Energie für die zu erwartende Lebensdauer des Demarkationsgerätes zu gewährleisten.

Weiterhin bevorzugterweise umfaßt das Demarkationsgerät einen zusätzlichen internen Energiespeicher, der die Versorgung des Demarkationsgerätes mit Energie zumindest teilweise unterstützt. Dabei kann der Begriff "teilweise" so verstanden werden, daß der zusätzliche interne Energiespeicher zu einem Zeitpunkt nur einen Anteil der Versorgung mit Energie aufbringt. Weiterhin kann unter dem Begriff "teilweise" auch zu verstehen sein, daß der zusätzliche interne Energiespeicher in solchen Zeiträumen zur Versorgung mit Energie beiträgt, wenn das Demarkationsgerät einen hohen Energiebedarf hat. Schließlich kann der zusätzliche interne Energiespeicher dazu dienen, die Energieversorgung aufrechtzuerhalten, wenn die anderen Alternativen zur Versorgung mit Energie ausfallen.

Außerdem bevorzugterweise umfaßt der zusätzliche interne Energiespeicher einen Akkumulator und/oder eine Batterie und/oder einen Kondensator und/oder eine Brennstoffzelle und/oder einen Akkumulator. Dabei ist es auch denkbar, daß der zusätzliche Energiespeicher auch von mehreren dieser jeweiligen Komponenten gebildet wird.

Bevorzugterweise wird anstatt der Laserdiode eine Lumineszenzdiode verwendet.

Ferner bevorzugterweise sind die Koppler (d.h. insbesondere der bzw. die (erste(n) Koppler und/oder der bzw. die weiteren Koppler) in einem Bauelement vereinigt sind.

Weiterhin bevorzugterweise sind die Fotodiode und die Laserdiode so angeordnet, daß kein Koppler nötig ist um die Funktionalität des Geräts zu gewährleisten.

Besonders bevorzugt sind die Fotodiode und die Laserdiode in einem Bauelement vereinigt, wodurch der Koppler hinfällig wird.

Weiterhin vorzugsweise unterstützt ein zusätzlich eingebauter Energiespeicher den Betrieb.

Ferner vorzugsweise ist der zusätzlich eingebaute Energiespeicher eine Batterie, ein Kondensator, ein Akkumulator oder eine Brennstoffzelle.

Weiterhin vorzugsweise werden mehrere Fotodioden und ein spezieller weiterer Koppler (anstatt dem vorgenannten weiteren Kopplers) verwendet, der zu jeder Fotodiode Licht leitetet.

Weiterhin bevorzugterweise werden mehrere Fotodioden und eine Kaskade von weiteren Kopplern (anstatt dem vorgenannten weiteren Koppler) verwendet wird, die zu jeder Fotodiode Licht leitet.

Bevorzugterweise werden in der optischen Zugangsleitung mehrere Wellenlängen verwendet.

Des weiteren bevorzugterweise werden anstatt einer Zugangsleitung zwei oder mehrere verwendet und das Demarkationsgerät koppelt aus mindestens einer Licht auf die Fotodiode aus und in mindestens eine Leitung ein Rücksignal ein. Dabei kann die Zugangsleitung insbesondere als optische Datenleitung ausgebildet sein.

Ferner vorzugsweise kann der Mikrocontroller Speicherung von Informationen, Modulation der Laserdiode, Sensor- oder Schaltfunktionen ausführen.

Weiterhin kann das Demarkationsgerät ausgelegt sein, die Integrität der zumindest einen optischen Datenleitung zu überprüfen. Insbesondere kann das Demarkationsgerät ausgelegt sein, die Integrität des optischen Netzwerkes und/oder die Integrität des Demarkationsgerätes in die zumindest eine optische Datenleitung und/oder das optische Netzwerk zu überprüfen.

### Netzwerk gemäß einem Aspekt

Ein weiterer Aspekt der vorliegenden Erfindung betrifft ein Netzwerk, umfassend
- zumindest eine erste Kommunikationseinrichtung
- zumindest eine optische Datenleitung und
- zumindest ein Demarkationsgerät gemäß der Erfindung, wobei die erste Kommunikationseinrichtung mit dem Demarkationsgerät durch die optische Datenleitung verbunden ist.

### Bevorzugte Ausführungsformen des Netzwerks

Ferner vorzugsweise umfaßt das Netzwerk weiterhin zumindest eine zweite Kommunikationseinrichtung, wobei die zweite Kommunikationseinrichtung mit dem Demarkationsgerät durch die optische Datenleitung verbunden ist und das Demarkationsgerät zwischen der ersten Kommunikationseinrichtung und der zweiten Kommunikationseinrichtung angeordnet ist.

Weiterhin kann ein Aspekt der vorliegenden Erfindung ein System betreffen, das aus einem Demarkationsgerät gemäß der Erfindung, einem Gerät mit optischer Empfangseinheit, das die vom Demarkationsgerät gesendeten Daten empfangen und verarbeiten kann und aus einer optischen Verbindung zwischen den beiden Geräten besteht.

### Verfahren gemäß einem Aspekt

Ein weiterer Aspekt der Erfindung betrifft ein Verfahren zum Betreiben zumindest eines Demarkationsgerätes, umfassend die folgenden Schritte:
- Entnehmen eines Teils des Lichts aus zumindest einer optischen Datenleitung;
- zumindest teilweise Umwandeln des entnommenen Teils des Lichts in elektrische Energie;
- Speichern zumindest eines Teils der elektrischen Energie;
- Versorgen des Demarkationsgerätes mit Energie unabhängig von einer externen Strom- und/oder Spannungsversorgung.

### Bevorzugte Ausführungsformen des Verfahrens

Das Verfahren kann vorzugsweise folgende Schritte umfassen:

Anordnen bzw. bereitstellen bzw. integrieren des zumindest einen Demarkationsgerätes in zumindest eine optische Datenleitung, insbesondere ein optisches Netzwerk. Es kann genau ein Demarkationsgerät angeordnet bzw. bereitgestellt bzw. integriert bzw. betrieben werden. Es können auch mehrere Demarkationsgeräte angeordnet bzw. bereitgestellt bzw. integriert bzw. betrieben werden.

Das Entnehmen eines Teils des Lichts aus zumindest einer optischen Datenleitung kann vorzugsweise anhand zumindest eines Lichtkoppelelements durchgeführt werden.

Das Umwandeln des entnommenen Teils des Lichts in elektrische Energie kann vorzugsweise anhand zumindest eines Lichtumwandlungselement durchgeführt werden. In anderen Worten kann dieser Schritt das Umwandeln zumindest eines Teils des entnommenen Teils des Lichts in elektrische Energie umfassen;

Das Speichern zumindest eines Teils der elektrischen Energie kann vorzugsweise anhand zumindest einer Speichereinrichtung erfolgen.

Ferner vorzugsweise wird der Teil des Lichts ausschließlich optischen Datensignalen entnommen ist.

Weiterhin vorzugsweise ist das optische Datensignal ein Telekommunikationsdatensignal.

Bevorzugt wird die Integrität der zumindest einen optischen Datenleitung überprüft. Insbesondere kann die Integrität des optischen Netzwerkes und/oder die Integrität des Demarkationsgerätes in die zumindest eine optische Datenleitung und/oder das optische Netzwerk überprüft werden. In anderen Worten kann das Verfahren eine Überprüfungsschritt zum Überprüfen der Integrität beinhalten. Hierbei kann insbesondere die Integrität der Datenleitung zwischen zumindest einem, insbesondere genau einem Provider und zumindest einem, insbesondere genau einem Teilnehmer überprüft werden. Vorzugsweise kann die Integrität der Datenleitung zwischen zumindest einem, insbesondere genau einem Server und zumindest einem, insbesondere genau einem Client überprüft werden.

Einer oder mehrere der vorangegangenen Schritte kann auch wiederholt durchgeführt werden.

Ein weiterer Aspekt der vorliegenden Erfindung kann die Verwendung eines Demarkationsgeräts, insbesondere eines erfindungsgemäßen Demarkationsgerätes in einer optischen Datenleitung, insbesondere einem optischen Netzwerk betreffen. Die Verwendung kann einen oder mehrere der folgenden Schritte umfassen
- Anordnen bzw. bereitstellen bzw. integrieren des Demarkationsgerätes in zumindest eine optische Datenleitung, insbesondere ein optisches Netzwerk;
- Entnehmen eines Teils des Lichts aus zumindest einer optischen Datenleitung durch zumindest ein Lichtkoppelelement;
- Umwandeln zumindest eines Teils des entnommenen Teils des Lichts in elektrische Energie durch zumindest ein Lichtumwandlungselement;
- Speichern zumindest eines Teils der elektrischen Energie durch zumindest eine Speichereinrichtung;
- Versorgen des Demarkationsgerätes mit Energie unabhängig von einer externen Strom- und/oder Spannungsversorgung;
- bestimmungsgemäßes Betreiben des Demarkationsgerätes, insbesondere zum Durchführen einer oder mehrerer Funktionen.

Die vorliegenden Erfindung ist nicht auf die oben beschriebenen Aspekte und deren bevorzugte Ausführungen beschränkt. Vielmehr können einzelne Merkmale der jeweiligen Aspekte beliebig miteinander kombiniert werden und somit weitere Aspekte bzw. weitere Ausführungsformen gebildet werden. Insbesondere gelten die mit Bezug auf das Demarkationsgerät beschriebenen Merkmale und Vorteile auch entsprechend für das Verfahren zum Betreiben eines Demarkationsgerätes und/oder die vorgenannte Verwendung. In anderen Worten gelten die obigen Ausführungen zu den Demarkationsgeräten bzw. deren bevorzugten Ausführungsformen in sinngemäßer Weise auch für das Verfahren und die Verwendung.

### Figurenbeschreibung

Bevorzugte Ausführungsformen werden im folgenden mit Bezug auf begleitende Zeichnungen beispielhaft beschrieben. Es wird angemerkt, daß selbst wenn Ausführungsformen separat beschrieben sind, einzelne Merkmale davon zu zusätzlichen Ausführungsformen kombiniert werden können. Es zeigt
Fig. 1: einen schematischen Aufbau des Demarkationsgerätes,
Fig. 2: einen schematischen Aufbau des Demarkationsgerätes,
Fig. 3: einen schematischen Aufbau des Demarkationsgerätes,
Fig. 4: einen schematischen Aufbau des Demarkationsgerätes,
Fig. 5: einen schematischen Aufbau des Demarkationsgerätes.

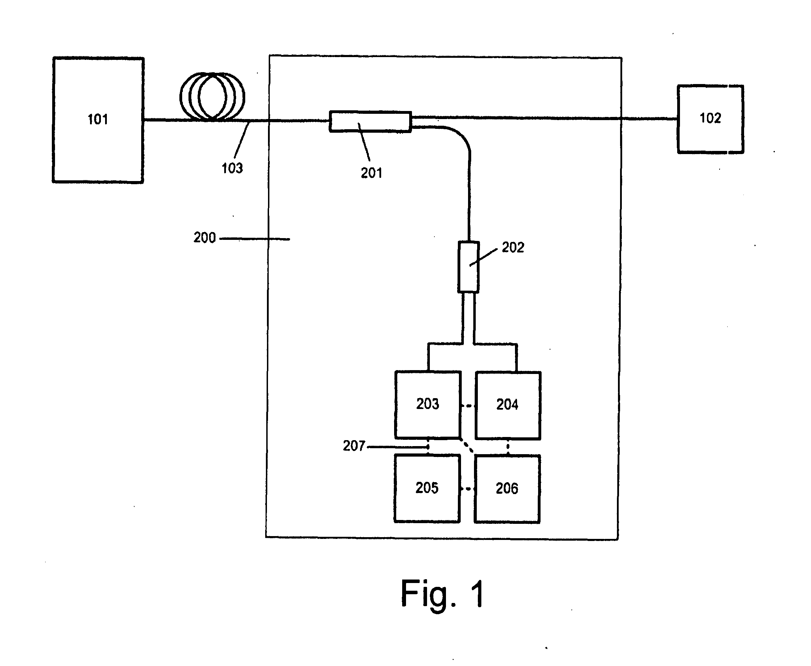

**Figur 1** zeigt einen schematischen Aufbau des Geräts und seine Integration in das optische Netzwerk.

Ein Demarkationsgerät (200) wird zwischen dem Endnutzer (102) und dem Zugangsanbieter (101) in einer optischen Datenleitung (103) eingebaut. Das Demarkationsgerät (200) kann beispielsweise ein Gerät sein, das ein Netzwerk eines Serviceproviders von einem Kunden bzw. einem Netzwerk eines Kunden abgrenzt. Beispielsweise können per Fernzugriff verschiedene Services bereitgestellt werden und/oder verschiedenen Services unterschiedliche Prioritäten und/oder Übertragungsgeschwindigkeiten zugewiesen werden. Weiterhin können Diagnoseverfahren durchgeführt werden und/oder bei Leitungsfehlern eine automatische und/oder manuelle Umleitung auf alternative Strecken ermöglicht. Beispielsweise kann das Demarkationsgerät (200) ein Endabschlußgerät sein, welches von einem Serviceprovider betrieben, insbesondere gesteuert bzw. geregelt wird und bei einem Kunden, d.h. kundenseitig installiert ist.

Ein Anteil des Datenverkehrs vom und/oder zum Benutzer und/oder Provider wird durch einen Koppler (201), der auch als erste Koppler bezeichnet sein kann, der Leitung entnommen, über eine optische Leitung auf einen weiteren Koppler (202) und auf eine Fotodiode (203) geleitet. Diese wandelt die Lichtenergie in elektrische Energie um und speichert diese elektrische Energie in einem Energiespeicher (205). Elektrische Verbindungen sind durch Linien nach Art von (207) gekennzeichnet. Der Energiespeicher könnte z.B. als Kondensator, als Brennstoffzelle oder als Akkumulator realisiert sein. Die Fotodiode (203) könnte zusätzlich auch noch für Intensitätsmessungen des einfallenden Lichts herangezogen werden oder als Daten-Empfänger für ein auf das Licht aufmoduliertes Signal dienen. Ein Elektronikbauelement (206) wird durch den Energiespeicher (205) versorgt und kann verschiedene Aufgaben übernehmen: So könnte dieses elektrisch Bauelement oder diese Bauelementegruppe Daten vom Zugangsanbieter (101) über die Fotodiode (203) empfangen, weitere Sensorfunktionen wie Temperaturmessungen, Feuchtigkeitsmessungen, etc. durchführen und/oder als Aktor z.B. zum Schalten eingesetzt werden. Das Element (206) könnte aber auch ganz einfach ein Prozessor sein, welcher eine Identifikationsnummer enthält oder komplexe Operationen, wie das Errechnen von Zuständen aus den Sensordaten durchführt. Ein Transmitter (204) sendet die vom Prozessor errechneten Werte zurück. Alternativ könnte der Transmitter auch direkt über die Fotodiode (203) gesteuert werden. Das emittierte Licht des Transmitters (204) enthält Informationen in Form von moduliertem Licht und wird durch die beiden Koppler (201, 202), d.h. durch den (ersten) Koppler (201) und durch den einen weiteren Koppler (202) wieder in die Leitung eingespeist, zurück in Richtung des Central Offices oder des Knotens (101). Dort können diese Informationen ausgelesen und verarbeitet werden.

Um das Gerät mit weniger Komponenten und damit günstiger zu realisieren sind Abwandlungen zur dem oben vorgestellten Aufbau denkbar. Statt der Verwendung von zwei separaten Kopplern (201, 202) ist auch die Verwendung von nur einem Koppler denkbar, der die Funktionen von (erstem) Koppler (201) und (weiterem) Koppler (202) übernimmt.

Oder aber eine geschickt gewählte Geometrie bzw. räumliche Anordnung innerhalb des Geräts bzw. des Gehäuses des Demarkationsgeräts läßt die Verwendung des (weiteren) Kopplers (202) hinfällig werden.

Prinzipiell kann jede Fotodiode durch Anlegen einer Spannung auch als Transmitter betrieben werden. Deshalb ließen sich auch der Transmitter und die Fotodiode in nur einem Bauelement vereinigen und der weitere Koppler (202) würde hinfällig werden.

Um den Betrieb des Demarkationsgeräts für den Fall, daß es Probleme mit der Energieübertragung, der Energiekonversion oder der Energiespeicherung gibt, sicherzustellen, ist es möglich noch zusätzliche Energiespeicher wie Batterien, Kondensatoren, Akkumulatoren und/oder Brennstoffzellen einzubauen oder Solarzellen hinzuzufügen. Diese Energiespeicher sind interne Energiespeicher und unterscheiden sich zumindest dadurch von externen Energiespeichern, die insbesondere nicht in oder an dem Gehäuse angeordnet sind.

Es ist auch denkbar die Energieversorgung vom Demarkationsgerät mit mehr als nur einer Fotodiode, beispielsweise 2, 3, 4, usw. Fotodioden zu realisieren. Es sind grundsätzlich zwei oder mehrere verschiedene Realisierungen denkbar:

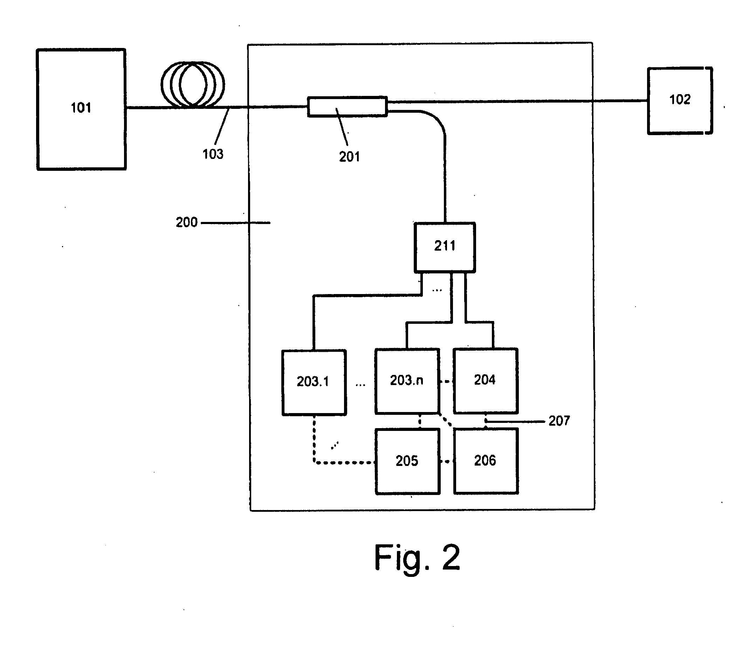

Eine mögliche Realisierung wird in **Figur 2** illustriert. Die Verteilung von Licht auf die Fotodioden (203.1 - 203.n) kann durch einen einzigen Koppler (211) (als bevorzugtem weiteren Lichtkoppelelement) erfolgen. Es handelt sich dabei um einen 1:n-Koppler, der einen Eingang und n Ausgänge besitzt. Das am Eingang einfallende Licht wird auf die n Ausgänge in einem vom dem verwendeten Koppler abhängigen Verhältnis verteilt.

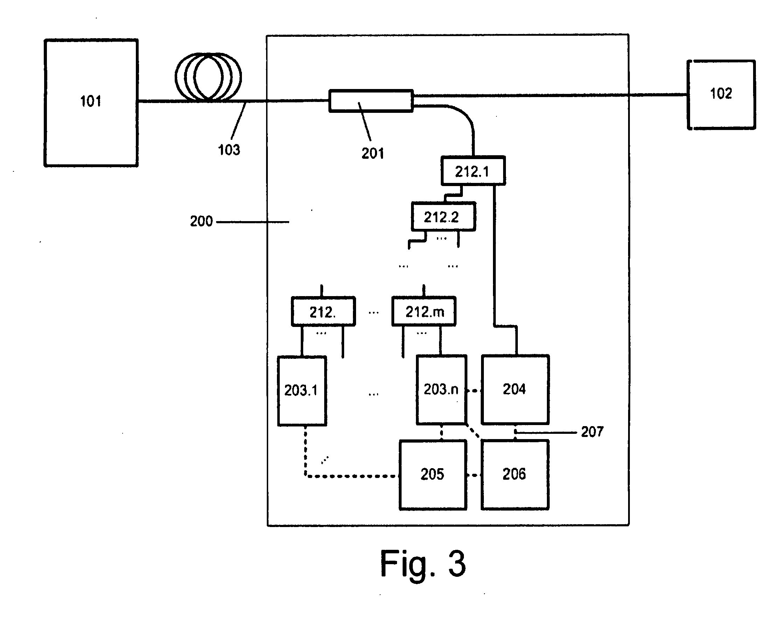

Eine weitere mögliche Realisierung ist eine Kaskade von Kopplern (212.1 - 212.m) gemäß **Figur 3**. Das Licht kann so in mehreren Stufen auf die Fotodioden verteilt werden.

Die verschiedenen Koppler (d.h. der erste Koppler und/oder die weiteren Koppler) können dabei wellenlängenselektiv sein um die Lichtenergie bei verschiedenen Wellenlängen möglichst effizient in elektrische Energie umzuwandeln. Ebenso können Fotodioden auf die Wellenlänge des einfallenden Lichts optimiert werden bzw. sein. Alternativ oder zusätzlich können die Koppler (d.h. der erste Koppler und/oder die weiteren Koppler) das Licht gleichmäßig auf die Fotodioden verteilen.

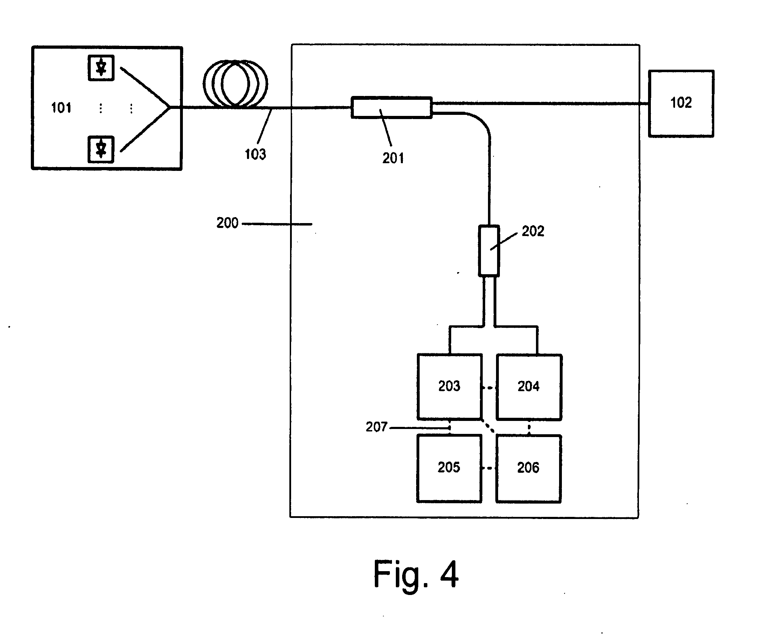

Die Energieversorgung des Demarkationsgeräts kann über ein oder mehrere optische Signale bei derselben oder bei verschiedenen Wellenlängen erfolgen. Falls mehrere optische Signale verwendet werden, kann die Energieversorgung über ein oder mehrere Wellenlängen und die Kommunikation mit dem Demarkationsgerät mit einer von diesen oder einer anderen Wellenlänge erfolgen, wie dies beispielhaft in **Figur 4** dargestellt ist.

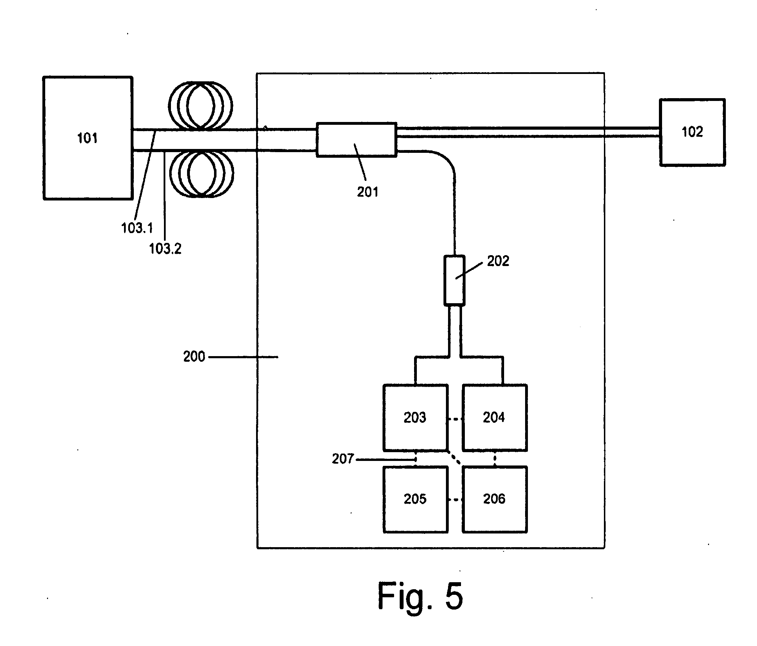

Für den Fall, daß ein Endnutzer mit zwei optischen Leitungen als bevorzugter optischer Datenleitungen (103.1) und (103.2) versorgt ist, wie dies in **Figur 5** dargestellt ist oder mit mehreren optischen Leitungen versorgt wird, kann das Demarkationsgerät so modifiziert werden, daß es mehrere Leitungen nutzt. Energie kann aus Licht von einer oder mehreren Leitungen bezogen werden, wobei das Rücksignal in mindestens eine der Leitungen eingespeist wird. Bevorzugt wird das Rücksignal in genau eine optische Leitung eingespeist.

### Bezugszeichenliste

- 103: optische Datenleitung
- 103.1: optische Datenleitung
- 103.2: optische Datenleitung
- 200: Demarkationsgerät
- 201: (erstes) Lichtkoppelelement
- 202: weiteres Lichtkoppelelement
- 203: Lichtumwandlungselement
- 203.1 - 203.n: Lichtumwandlungselement
- 204: Transmitter
- 205: Speichereinrichtung
- 206: Elektronikbauelement
- 211: weiteres Lichtkoppelelement
- 212.1 - 212.m: weitere Lichtkoppelelemente

## Patentansprüche

1. Demarkationsgerät (200), das in zumindest eine optische Datenleitung (103) zwischen anderen Geräten (101; 102) eines optischen Netzwerkes integrierbar ist, umfassend
- zumindest ein Lichtkoppelelement (201), welches ausgelegt ist, aus der zumindest einen optischen Datenleitung (103) zumindest einen Teil des Lichts eines Telekommunikationsdatensignals zu entnehmen, und internen Komponenten (201; 202, 203, 204, 205, 206) des Demarkationsgerätes (200) zuzuführen, wobei das Telekommunikationsdatensignal zur Datenübermittlung zwischen den anderen Geräten (101, 102) des optischen Netzwerkes dient,
- zumindest ein Lichtumwandlungselement (203; 203.1 - 203.n) als interne Komponente, welches ausgelegt ist, den entnommenen Teil des Lichts zumindest teilweise in elektrische Energie umzuwandeln, und teilweise in elektrische Datensignale-umzuwandeln, und
- zumindest eine Speichereinrichtung (205), welche ausgelegt ist, diese elektrische Energie zumindest teilweise zu speichern,
wobei eine Versorgung des Demarkationsgerätes (200) mit Energie unabhängig von einer externen Strom- und/oder Spannungsversorgung ist.

2. Demarkationsgerät (200) nach Anspruch 1, wobei das Demarkationsgerät (200) weiterhin zumindest einen Transmitter (204) umfaßt, wobei die Versorgung des Demarkationsgerätes (200) mit Energie über eine oder mehrere Lichtwellenlängen erfolgt und eine Kommunikation des Demarkationsgerätes (200) mit zumindest einer dieser Lichtwellenlängen erfolgt.

3. Demarkationsgerät (200) nach Anspruch 1 oder 2, wobei der entnommene Teil des Lichts ausschließlich optischen Datensignalen entnommen ist.

4. Demarkationsgerät (200) nach Anspruch 2 oder 3, wobei der Transmitter (204) über zumindest eine der Lichtumwandlungselemente (203; 203.1 - 203.n) gesteuert und/oder geregelt wird.

5. Demarkationsgerät (200) nach einem der Ansprüche 2 bis 4, wobei das Lichtkoppelelement (201) dazu ausgebildet ist, den entnommenen Teil des Lichts auf das zumindest eine Lichtumwandlungselement (203; 203.1 - 203.n) zu leiten und Licht, das von dem zumindest einen Transmitter (204) emittiert wird, zumindest teilweise in die optische Leitung (103) zu speisen.

6. Demarkationsgerät (200) nach einem der Ansprüche 2 bis 5, wobei das Demarkätionsgerät (200) zumindest ein weiteres Lichtkoppelelement (202; 211; 212.1 - 212.m) umfaßt, wobei zumindest eines der weiteren Lichtkoppelelemente (202; 211; 212.1 - 212.m) dazu ausgelegt ist, den durch das erste Lichtkoppelelement (201) entnommenen Teil des Lichts auf zumindest eines der Lichtumwandlungselemente (203; 203.1 - 203.n) zu leiten und/oder dazu ausgelegt ist, das Licht, das von dem zumindest einen Transmitter (204) emittiert wird, zumindest teilweise zu dem Lichtkoppelelement (201) zu leiten.

7. Demarkationsgerät (200) nach einem der Ansprüche 2 bis 6, wobei das Demarkationsgerät (200) mehrere Lichtkoppelelemente (201) und/oder mehrere Lichtumwandlungselemente (203; 203.1 - 203.n) und/oder mehrere Transmitter (204) und/oder mehrere weitere Lichtkoppelelemente (202; 211; 212.1 - 212.m) umfaßt.

8. Demarkationsgerät (200) nach einem der vorangehenden Ansprüche, wobei zumindest eines der Lichtumwandlungselemente (203; 203.1 - 203.n) weiterhin dazu ausgelegt ist, eine Intensität des einfallenden Lichts zu bestimmen und/oder wobei zumindest eines der Lichtumwandlungselemente (203; 203.1 - 203.n) ein Datenempfänger ist.

9. Demarkationsgerät (200) nach einem der vorangehenden Ansprüche, wobei das Demarkationsgerät (200) weiterhin zumindest ein Elektronikbauelement (206) umfaßt, wobei zumindest eines der Elektronikbauelemente (206) dazu ausgelegt ist, Informationen zu speichern und/oder den Transmitter (204) zu modulieren und/oder Sensorfunktionen und/oder Schaltfunktionen auszuführen.

10. Demarkationsgerät (200) nach den Ansprüchen 2 bis 9, wobei das Demarkationsgerät (200) weiterhin ausgebildet ist, von dem zumindest einen Elektronikbauelement (206) bestimmte Werte über den zumindest einen Transmitter (204) in die optische Datenleitung (103) einzuspeisen.

11. Demarkationsgerät (200) nach einem der Ansprüche 6 bis 10, wobei das Lichtkoppelelement (201) und/oder zumindest eines der weiteren Lichtkoppelelemente (202; 211; 212.1 - 212.m) wellenlängenselektiv sind und an eine Wellenlängensensitivität zumindest eines der Lichtumwandlungselemente (203; 203.1 - 203.n) angepaßt sind.

12. Demarkationsgerät (200) nach einem der Ansprüche 6 bis 11, wobei mehrere weitere Lichtkoppelelemente (212.1 - 212.m) in einer Kaskade verschaltet sind und/oder zu jeder der Lichtumwandlungselemente (203; 203.1 - 203.n) Licht leiten.

13. Netzwerk, umfassend
- zumindest eine erste Kommunikationseinrichtung (101) und eine zweite Kommunikationseinrichtung (102),
- zumindest eine optische Datenleitung (103) und
- zumindest ein Demarkationsgerät (200) nach einem der vorangehenden Ansprüche, wobei
die erste Kommunikationseinrichtung (101) mit dem Demarkationsgerät (200) durch die optische Datenleitung (103) verbunden ist und wobei die zweite Kommunikationseinrichtung (102) mit dem Demarkationsgerät (200) durch die optische Datenleitung (103) verbunden ist und das Demarkationsgerät (200) zwischen der ersten Kommunikationseinrichtung (101) und der zweiten Kommunikationseinrichtung (102) in die optische Datenleitung (103) integriert ist.

14. Verfahren zum Betreiben zumindest eines Demarkationsgerätes (200), umfassend die folgenden Schritte:
- Integrieren des Demarkationsgerätes (200) in zumindest eine optische Datenleitung (103) zwischen anderen Geräten (101, 102) eines optischen Netzwerkes;
- Entnehmen eines Teils des Lichts eines Telekommunikationsdatensignals aus der zumindest einen optischen Datenleitung (103), wobei das Telekommunikationsdatensignal zur Datenübermittlung zwischen den anderen Geräten (101, 102) dient;
- Zuführen des entnommenen Teil des Lichts zu internen Komponenten (201, 202, 203, 204, 205, 206) des Demarkationsgerätes (200);
- zumindest teilweise Umwandeln des entnommenen Teils des Lichts in elektrische Energie;
- teilweise Umwandeln des entnommenen Teils des Lichts in elektrische Datensignale;
- Speichern zumindest eines Teils der elektrischen Energie; und
- Versorgen des Demarkationsgerätes (200) mit Energie unabhängig von einer externen Strom- und/oder Spannungsversorgung.

15. Verfahren nach Anspruch 14, wobei das optische Datensignal ein Telekommunikationsdatensignal ist und wobei der entnommene Teil des Lichts ausschließlich optischen Datensignalen entnommen ist.

## Claims

1. A demarcation device (200), which can be integrated into at least one optical data line (103) between other devices (101, 102) of an optical network, comprising:
- at least one light-coupling element (201) adapted to withdraw at least part of the light of a telecommunications data signal from the at least one optical data line (103) and feed it to internal components (201, 202, 203, 204, 205, 206) of the demarcation device (200), wherein the telecommunications data signal serves to transmit data between the other devices (101, 102) of the optical network,
- at least one light-converting element (203; 203.1 - 203.n) as an internal component, which is adapted to convert the withdrawn part of the light at least partially into electric energy and partially into electric data signals, and
- at least one storage device (205) adapted to at least partially store this electric energy,
wherein a supply of the demarcation device (200) with energy is independent of an external current and/or voltage supply.

2. The demarcation device (200) according to claim 1, wherein the demarcation device (200) further comprises at least one transmitter (204), wherein the supply of the demarcation device (200) with energy takes place via one or more light wavelengths, and a communication of the demarcation device (200) takes place with at least one of these light wavelengths.

3. The demarcation device (200) according to claim 1 or 2, wherein the withdrawn part of the light is exclusively withdrawn from optical data signals.

4. The demarcation device (200) according to claim 2 or 3, wherein the transmitter (204) is controlled via at least one of the light-converting elements (203; 203.1 - 203.n).

5. The demarcation device (200) according to one of claims 2 to 4, wherein the light-coupling element (201) is adapted to guide the withdrawn part of the light to the at least one light-converting element (203; 203.1 - 203.n) and to feed light emitted by the at least one transmitter (204) at least partially into the optical line (103).

6. The demarcation device (200) according to one of claims 2 to 5, wherein the demarcation device (200) comprises at least one further light-coupling element (202; 211; 212.1 - 212.m), wherein at least one of the further light-coupling elements (202; 211; 212.1 - 212.m) is adapted to guide the light withdrawn by the first light-coupling element (201) to at least one of the light-converting elements (203; 203.1 - 203.n) and/or adapted to guide the light transmitted by the at least one transmitter (204) at least partially to the light-coupling element (201).

7. The demarcation device (200) according to one of claims 2 to 6, wherein the demarcation device (200) comprises several light-coupling elements (201) and/or several light-converting elements (203; 203.1 - 203.n) and/or several transmitters (204) and/or several further light-coupling elements (202; 211; 212.1 - 212.m).

8. The demarcation device (200) according to one of the preceding claims, wherein at least one of the light-converting elements (203; 203.1 - 203-n) is further adapted to determine an intensity of the incident light and/or wherein at least one of the light-converting elements (203; 203.1 - 203.n) is a data receiver.

9. The demarcation device (200) according to one of the preceding claims, wherein the demarcation device (200) further comprises at least one electronics component part (206), wherein at least one of the electronics component parts (206) is adapted to store information and/or to modulate the transmitter (204) and/or to perform sensor functions and/or switch functions.

10. The demarcation device (200) according to claims 2 to 9, wherein the demarcation device (200) is further adapted to feed values determined by the at least one electronics component part (206) into the optical data line (103) via the at least one transmitter (204).

11. The demarcation device (200) according to one of claims 6 to 10, wherein the light-coupling element (201) and/or at least one of the further light-coupling elements (202; 211; 212.1 - 212.m) is wavelength-selective and matched to a wavelength sensitivity of at least one of the light-converting elements (203; 203.1 - 203.n).

12. The demarcation device (200) according to one of claims 6 to 11, wherein several further light-coupling elements (212.1 - 212.m) are connected in cascade and/or guide light to each of the light-converting elements (203; 203.1 - 203.n).

13. A network, comprising:
- at least a first communication device (101) and a second communication device (102),
- at least one optical data line (103), and
- at least one demarcation device (200) according to one of the preceding claims, wherein
the first communication device (101) is connected to the demarcation device (200) by the optical data line (103), and wherein the second communication device (102) is connected to the demarcation device (200) by the optical data line (103), and the demarcation device (200) is integrated into the optical data line (103) between the first communication device (101) and the second communication device (102).

14. A method for operating at least one demarcation device (200), comprising the following steps:
- integrating the demarcation device (200) into an optical data line (103) between other devices (101, 102) of an optical network;
- taking part of the light of a telecommunications data signal from the at least one optical data line (103), wherein the telecommunications data signal serves to transmit data between the other devices (101, 102);
- feeding the withdrawn part of the light to internal components (201, 202, 203, 204, 205, 206) of the demarcation device (200);
- at least partially converting the withdrawn part of the light into electric energy;
- partially converting the withdrawn part of the light into electric data signals;
- storing at least part of the electric energy; and
- supplying the demarcation device (200) with energy independent of an external current and/or voltage supply.

15. The method according to claim 14, wherein the optical data signal is a telecommunications data signal, and wherein the withdrawn part of the light is exclusively withdrawn from optical data signals.

## Revendications

1. Appareil de démarcation (200), pouvant être intégré dans au moins une ligne optique de données (103) entre d'autres appareils (101, 102) d'un réseau optique, comprenant :
- au moins un élément de couplage de lumière (201), qui est dimensionné de manière à prélever de la ou des lignes optiques de données (103) au moins une partie de la lumière d'un signal de données de télécommunication, et à l'amener à des composantes intérieures (201, 202, 203, 204, 205, 206) de l'appareil de démarcation (200), sachant que le signal de données de télécommunication sert à la communication de données entre les autres appareils (101, 102) du réseau optique,
- au moins un élément de transformation de lumière (203 ; 203.1 - 203.n) en tant que composante intérieure, qui est dimensionné de manière à transformer la partie prélevée de la lumière au moins en partie en énergie électrique et en partie en signaux de données électriques, et
- au moins un dispositif de stockage (205), qui est dimensionné de manière à stocker cette énergie électrique au moins en partie,
sachant qu'une alimentation en énergie de l'appareil de démarcation (200) est indépendante d'un approvisionnement extérieur en courant et/ou en tension.

2. Appareil de démarcation (200) d'après la revendication 1, sachant que l'appareil de démarcation (200) comprend en outre au moins un transmetteur (204), sachant que l'alimentation en énergie de l'appareil de démarcation (200) a lieu au moyen d'une ou de plusieurs longueurs d'ondes de la lumière, et qu'une communication de l'appareil de démarcation (200) a lieu au moyen d'au moins une de ces longueurs d'ondes de la lumière.

3. Appareil de démarcation (200) d'après la revendication 1 ou 2, sachant que la partie prélevée de la lumière est prélevée exclusivement de signaux de données optiques.

4. Appareil de démarcation (200) d'après la revendication 2 ou 3, sachant que le transmetteur (204) est commandé et/ou réglé au moyen d'au moins un des éléments de transformation de lumière (203 ; 203.1 - 203.n).

5. Appareil de démarcation (200) d'après une des revendications de 2 à 4, sachant que l'élément de couplage de lumière (201) est réalisé de manière à conduire la partie de lumière prélevée sur le ou les éléments de transformation de lumière (203 ; 203.1 - 203.n) et à introduire la lumière émise par le ou les transmetteurs (204) au moins en partie dans la ligne optique (103).

6. Appareil de démarcation (200) d'après une des revendications de 2 à 5, sachant que l'appareil de démarcation (200) comprend au moins un élément de couplage de lumière (202 ; 211 ; 212.1 - 212.m) ultérieur, sachant qu'au moins un des éléments de couplage de lumière (202 ; 211 ; 212.1 - 212.m) ultérieurs est dimensionné de manière à guider la partie de la lumière prélevée par le premier élément de couplage de lumière (201) sur au moins un des éléments de transformation de lumière (203 ; 203.1 - 203.n) et/ou qu'il est dimensionné de manière à guider la lumière émise par le ou les transmetteurs (204) au moins en partie jusqu'à l'élément de couplage de lumière (201).

7. Appareil de démarcation (200) d'après une des revendications de 2 à 6, sachant que l'appareil de démarcation (200) comprend plusieurs éléments de couplage de lumière (201) et/ou plusieurs éléments de transformation de lumière (203 ; 203.1 - 203.n) et/ou plusieurs transmetteurs (204) et/ou plusieurs éléments de couplage de lumière (202 ; 211 ; 212.1 - 212.m) ultérieurs.

8. Appareil de démarcation (200) d'après une des revendications précédentes, sachant qu'au moins un des éléments de transformation de lumière (203 ; 203.1 - 203.n) est en outre dimensionné de manière à déterminer une intensité de la lumière incidente et/ou sachant qu'au moins un des éléments de transformation de lumière (203 ; 203.1 - 203.n) est un récepteur de données.

9. Appareil de démarcation (200) d'après une des revendications précédentes, sachant que l'appareil de démarcation (200) comprend en outre au moins un composant électronique (206), sachant qu'au moins un des composants électroniques (206) est dimensionné de manière à stocker des informations et/ou à moduler le transmetteur (204) et/ou à effectuer des fonction de détection et/ou des fonction de commutation.

10. Appareil de démarcation (200) d'après les revendications de 2 à 9, sachant que l'appareil de démarcation (200) est en outre réalisé de manière à introduire certaines valeurs du ou des composants électroniques (206) dans la ligne optique de données (103) au moyen du ou des transmetteurs (204).

11. Appareil de démarcation (200) d'après une des revendications de 6 à 10, sachant que l'élément de couplage de lumière (201) et/ou au moins un des éléments de couplage de lumière (202 ; 211 ; 212.1 - 212.m) ultérieurs sont sélectifs par rapport à la longueur d'onde et qu'ils sont adaptés à une sensibilité à la longueur d'onde d'au moins un des éléments de transformation de lumière (203 ; 203.1 - 203.n).

12. Appareil de démarcation (200) d'après une des revendications de 6 à 11, sachant que plusieurs éléments de couplage de lumière (212.1 - 212m) ultérieurs sont connectés en cascade et/ou qu'ils guident de la lumière à chacun des éléments de transformation de lumière (203 ; 203.1 - 203.n).

13. Réseau, comprenant :
- au moins un premier moyen de communication (101) et un deuxième moyen de communication (102),
- au moins une ligne optique de données (103) et
- au moins un appareil de démarcation (200) d'après une des revendications précédentes, sachant que
le premier moyen de communication (101) est connecté avec l'appareil de démarcation (200) au moyen de la ligne optique de données (103) et sachant que le deuxième moyen de communication (102) est connecté avec l'appareil de démarcation (200) au moyen de la ligne optique de données (103) et que l'appareil de démarcation (200) est intégré dans la ligne optique de données (103) entre le premier moyen de communication (101) et le deuxième moyen de communication (102).

14. Procédé de fonctionnement d'au moins un appareil de démarcation (200), comprenant les étapes suivantes :
- intégrer l'appareil de démarcation (200) dans au moins une ligne optique de données (103) entre d'autres appareils (101, 102) d'un réseau optique ;
- prélever une partie de la lumière d'un signal de données de télécommunication de la ou des lignes optiques de données (103), sachant que le signal de données de télécommunication sert à la communication de données entre les autres appareils (101, 102) ;
- amener la partie de la lumière prélevée à des composantes intérieures (201, 202, 203, 204, 205, 206) de l'appareil de démarcation (200) ;
- transformer la partie prélevée de la lumière au moins en partie en énergie électrique ;
- transformer la partie prélevée de la lumière au moins en partie en signaux de données électriques ;
- stocker au moins en partie l'énergie électrique ; et
- alimenter l'appareil de démarcation (200) en énergie indépendamment d'un approvisionnement extérieur en courant et/ou en tension.

15. Procédé d'après la revendication 14, sachant que le signal de données optique est un signal de données de télécommunication et sachant que la partie de lumière prélevée est prélevée exclusivement de signaux de données optiques.
